(19) Europäisches Patentamt European Patent Office Office européen des brevets

(11) **EP 3 751 755 B1**

(12) **EUROPEAN PATENT SPECIFICATION**

(45) Date of publication and mention of the grant of the patent:
**07.06.2023 Bulletin 2023/23**

(21) Application number: **19180372.5**

(22) Date of filing: **14.06.2019**

(51) International Patent Classification (IPC):
*G08G 5/00* *(2006.01)*      *H04B 7/185* *(2006.01)*
*B64C 39/02* *(2023.01)*      *H04W 16/18* *(2009.01)*
*H04W 36/00* *(2009.01)*

(52) Cooperative Patent Classification (CPC):
**H04B 7/18504; B64C 39/024; G08G 5/0013;**
**G08G 5/0021; G08G 5/0026; G08G 5/0069;**
**H04W 16/18; H04W 36/0083;** B64U 2201/20

(54) **APPARATUS AND METHOD FOR GUIDING UNMANNED AERIAL VEHICLES**

VORRICHTUNG UND VERFAHREN ZUR FÜHRUNG VON UNBEMANNTEN LUFTFAHRZEUGEN

APPAREIL ET PROCÉDÉ DE GUIDAGE D'AÉRONEFS SANS PILOTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.12.2020 Bulletin 2020/51**

(73) Proprietor: **Dimetor GmbH
4203 Altenberg/Linz (AT)**

(72) Inventors:
• **NEUBAUER, Thomas
  4203 Altenberg/Linz (AT)**

• **WANA, Thomas
  1100 Wien (AT)**

(74) Representative: **Grünecker Patent- und
Rechtsanwälte
PartG mbB
Leopoldstraße 4
80802 München (DE)**

(56) References cited:
**US-A1- 2016 328 980      US-A1- 2016 371 985
US-A1- 2018 038 695      US-A1- 2018 293 897
US-A1- 2019 044 609**

EP 3 751 755 B1

## Description

## BACKGROUND

1. Technical field

The present disclosure relates to the technical field of wireless communication for air traffic control.

2. Description of related art

The operation of unmanned aerial vehicles (UAVs) requires permanent monitoring and control of the position and moving direction of the unmanned aerial vehicle during a flight along a flight path in three-dimensional air space, in order to provide for sufficient safety during operation. In particular, beyond visual line of sight (BLVOS) operation of UAVs imposes new requirements on air traffic control.

US 2018/293897A1 relates to 3D network coverage modeling for predicting network coverage for UAV command and control. In particular, a coverage model is generated based on network configuration data including a site location. Measured network signal robustness values obtained from UAVs or other data sources are used as feedback data to update the model or increase coverage quality forecasts.

US 2016/371985 A1 relates to UAV flight path optimization based on network coverage, which is mapped in a three-dimensional manner, as a criterion. A signal strength for a geographical area and height is measured and/or calculated for a base station based on a distance from the base station, geographic topology, and network topography information is considered.

2016/328980 A1 relates to creation of a 3D signal coverage model including location information and signal strength of nodes. A sequence of received signal strength measurements is used with locations of transmitters to model and predict signal propagation losses.

## SUMMARY

The present disclosure is directed at facilitating air traffic management, in particular for unmanned aerial vehicles in beyond-line-of sight applications and controlled via wireless communication, by providing three-dimensional (3D) network coverage data representing a current state of the network.

The scope of the invention is defined by the independent claims.

Provided is an apparatus for computing data for guiding an unmanned aerial vehicle, UAV, in a three-dimensional, 3D, flight area within airspace, comprising a first interface configured for acquiring, from a data storage, stored network data including location data of network nodes of a wireless communication network within the flight area, a second interface configured for acquiring current network data including current connectivity data of the network nodes, and circuitry configured for computing current 3D coverage data indicating current network coverage along three dimensions in the 3D flight area by correlating the stored network data and the current network data. The current 3D coverage data include an indication of a handover probability of handover by the UAV from one network node to another network node.

Accordingly, determination of a current state of network connectivity and coverage is facilitated, for enhancing safety in UAV operation.

The apparatus comprises an output interface configured for automatically reporting the current 3D coverage data to an aviation control node for granting an air traffic control clearance for the UAV in the flight area or for performing control of the UAV.

For instance, the second interface is configured for receiving event data indicating known future network events known to occur at the network nodes at a time later than receiving the event data.

For example, the current network data include results of connectivity measurements performed by the UAV or a communication terminal different from the UAV.

Accordingly, validation and calibration of the 3D coverage computing process is facilitated by providing current measurements.

For instance, the current network data include an indication of a current number, or aggregated number over a period of time, of communication terminals per area unit, and the output interface reports that number of communication terminals per area to the aviation control node.

Accordingly, flight paths for UAVs can be planned so as to avoid flying above areas where many humans are currently present.

For instance, the current 3D coverage data include a signal power.

The current 3D coverage data include an indication of a handover probability of handover by the UAV from one network node to another network node.

This facilitates alleviating the risk of connection loss due to handover.

For example, the handover probability depends on at least one of the moving speed and the moving direction of the UAV.

In some embodiments, the stored network data and the current network data include data of a plurality of wireless communication networks.

Accordingly, a redundancy in connectivity, as provided by plurality of communication networks may be utilized for maintaining a connected state of a UAV.

For instance, the three-dimensional flight area is subdivided into a plurality of sub-areas, and the circuitry is configured for computing the current 3D coverage data respectively for the plurality of sub-areas.

This facilitates precise efficient processing of a current 3D coverage as well as determination of a current network coverage, for instance when a different number of connectivity measurements are available in different regions of the flight area.

For example, the circuitry is configured for computing the current 3D coverage data based on a model for predicting 3D coverage, and the model is generated based on the stored network data and automatically updated based on the current network data.

In some embodiments, the model is updated by machine learning.

Further provided is a method for computing data for guiding unmanned aerial vehicles, UAVs, in a three-dimensional, 3D, flight area within airspace, comprising acquiring, from a data storage, stored network data including location data of network nodes of a wireless communication network within the flight area, acquiring current network data including current connectivity data of the network nodes; and computing current 3D coverage data indicating current network coverage along three dimensions in the three-dimensional flight area by correlating the stored network data and the current network data. The current 3D coverage data include an indication of a handover probability of handover by the UAV from one network node to another network node.

Accordingly, determination of a current state of network connectivity and coverage is facilitated, for enhancing safety in UAV operation.

The method comprises automatically reporting the current 3D coverage data to an aviation control node for granting an air traffic control clearance for the UAV in the flight area or for performing control of the UAV.

For instance, the method comprises receiving event data indicating known future network events known to occur at the network nodes at a time later than receiving the event data.

In some embodiments, the current network data include results of connectivity measurements performed by the UAV or a communication terminal different from the UAV.

Accordingly, validation and calibration of the 3D coverage computing process is facilitated by providing current measurements.

For example, the current network data include an indication of a current number, or aggregated number over a period of time, of communication terminals per area unit, and the output interface reports that number of communication terminals per area to the aviation control node.

Accordingly, flight paths for UAVs can be planned so as to avoid flying above areas where many humans are currently present.

For instance, the current 3D coverage data include a signal power.

The current 3D coverage data include an indication of a handover probability of handover by the UAV from one network node to another network node.

This facilitates alleviating the risk of connection loss due to handover.

For example, the handover probability depends on at least one of the moving speed and the moving direction of the UAV.

In some embodiments, the stored network data and the current network data include data of a plurality of wireless communication networks.

Accordingly, a redundancy in connectivity, as provided by plurality of communication networks may be utilized for maintaining a connected state of a UAV.

For instance, the three-dimensional flight area is subdivided into a plurality of sub-areas, and the method comprises computing the current 3D coverage data respectively for the plurality of sub-areas.

This facilitates precise efficient processing of a current 3D coverage as well as determination of a current network coverage, for instance when a different number of connectivity measurements are available in different regions of the flight area.

For example, the method comprises computing the current 3D coverage data based on a model for predicting 3D coverage, and the model is generated based on the stored network data and automatically updated based on the current network data.

In some embodiments, the model is updated by machine learning.

Further provided is an aviation control node for guiding an unmanned aerial vehicle, UAV, in a three-dimensional, 3D, flight area within airspace, comprising an input interface configured for acquiring automatically reported current 3D coverage data indicating current network coverage along three dimensions in the three-dimensional flight area, the 3D coverage data being determined by correlating stored network data including location data of network nodes of a wireless communication network and current network data including current connectivity data of the network nodes, and circuitry configured for performing the guiding of the UAV or for granting an air traffic control clearance for the UAV in the flight area based on the current 3D coverage data. The current 3D coverage data include an indication of a handover probability of handover by the UAV from one network node to another network node.

This facilitates making efficient decisions and enhancing safety in UAV guidance.

Also provided is an aviation control method for guiding an unmanned aerial vehicle, UAV, in a three-dimensional, 3D, flight area within airspace, comprising acquiring automatically reported current 3D coverage data indicating current network coverage along three dimensions in the three-dimensional flight area, the 3D coverage data being determined by correlating stored network data including location data of network nodes of a wireless communication network and current network data including current connectivity data of the network nodes, and performing the guiding of the UAV or granting an air traffic control clearance for the UAV in the flight area based on the current 3D coverage data. The current 3D coverage data include an indication of a handover probability of handover by the UAV from one network node to another network node.

This facilitates making efficient decisions and enhancing safety in UAV guidance.

## BRIEF DESCRIPTION OF DRAWINGS

In the following detailed description, exemplary embodiments are described in more detail with reference to the accompanying figures and drawings, wherein:

Fig. 1 is a block diagram of an apparatus for computing data for guiding UAVs (unmanned aerial vehicles);
Fig. 2 is a flow chart of a method for computing data for guiding UAV;
Fig. 3 is a graph showing a division of a flight area into sub-areas; and
Fig. 4 is a block diagram showing a control system for UAV air traffic;
Fig. 5 is a block diagram showing a data processing system including individual data processing instances, a hub data center, and an air navigation service provider;
Fig. 6 is a block diagram showing an aviation control node; and
Fig. 7 is a flow chart showing an aviation control method.

## DETAILED DESCRIPTION

To meet the requirements stemming from UAV operation beyond visual line of sight, the present disclosure proposes using wireless communication networks for providing a command and control link for planning, monitoring, controlling flights of UAVs. In particular, network planning information is taken into account for the purpose of guiding a UAV within a flight area.

However, radio network planning currently focuses on radio propagation and performance for users of mobile communication devices (such as mobile telephones) on even ground as well as in buildings. Mobile communication networks are planned, designed, constructed, and optimized for these use cases. Accordingly, conventional radio network planning is mainly based on a two-dimensional processing and view. In addition, shapes of buildings may be considered in a three-dimensional manner.

An example for a radio network planning tool that provides also 3D building data capabilities, by means of a user manual, is provided in here: https://ranplanwireless.com/files/National%20Advisory/Advanced%20Material/iBuildNet%204 .0%20User%20manual. pdf (company RANPLAN).

Other examples for the world's leading radio network planning tools, also supporting 3D map data for building shapes, include:

• Atoll from Forsk: https://www.forsk.com/atoll-overview
• ASSET from TEOCO: https://www.teoco.com/products/planning-optimization/asset-radio-planning/
• Planet from Infovista: https://www.infovista.com/planet/rf-planning-optimization

Examples of 3D digital maps providers for radio network planning include:

• Visicom: https://visicomdata.com/

- NTT data https://www.aw3d.jp/en/applications/?id=663
- Luxcarta: https://luxcarta.com/product/geodata-for-rf-planning-and-optimization/, https://luxcarta.com/resources/LuxCarta RFPlanning&Optimization 2018 web.pdf

Conventionally, there is limited or no interaction between mobile communication networks and aviation or air traffic control and management. However, in addition to manned aviation, unmanned aviation involving unmanned aerial vehicles (UAVs) is evolving. In order to provide guidance for the UAV traffic, mobile communication systems represent an efficient approach. The development of UAV traffic management systems (UTMs) for handling the air traffic management / air traffic control in unmanned aviation imposes new requirements on mobile radio systems applicable to unmanned aviation.

For instance, the new requirements are due to the three dimensional (3D) nature of air traffic, in which height may play essential role in determining a flight path, especially in view of availability and quality of the wireless signal. Conventional network planning techniques do not allow for modeling a signal course in accordance with a three-dimensional pattern of positions (e.g. including the takeoff and/or landing of a UAV). Moreover, for the new use cases of unmanned aviation and UTM, new methods and metrics / parameters may become relevant, e.g. in view of the use of mobile communication systems.

Moreover, in conventional radio network planning, static states of radio network nodes (or their transmitters / receivers) are assumed. For instance, it is not considered whether a network node is currently in an on or off state. Conventional radio network planning does not provide current or "live" (real time) network plans, as for traditional radio network planning this is not a requirement, whereas it is critical for aviation purposes. For the evaluation or adjustment of the prediction or modeling, measured data from drive testing may be utilized. However, these measured data are snapshots recorded at a specific point in time on even earth and thus do not provide a reliable up-to date information.

In addition, conventional radio network planning does not provide interfaces or data formats which may be used in air traffic management.

Accordingly, the methods known from conventional radio network planning are not sufficient for satisfying the demands of UAV traffic management.

The present disclosure is directed at providing an apparatus and a method for efficiently determining the coverage of communication networks in a 3D flight area, to allow for flights of UAVs "beyond visual line of sight" (BVLOS).

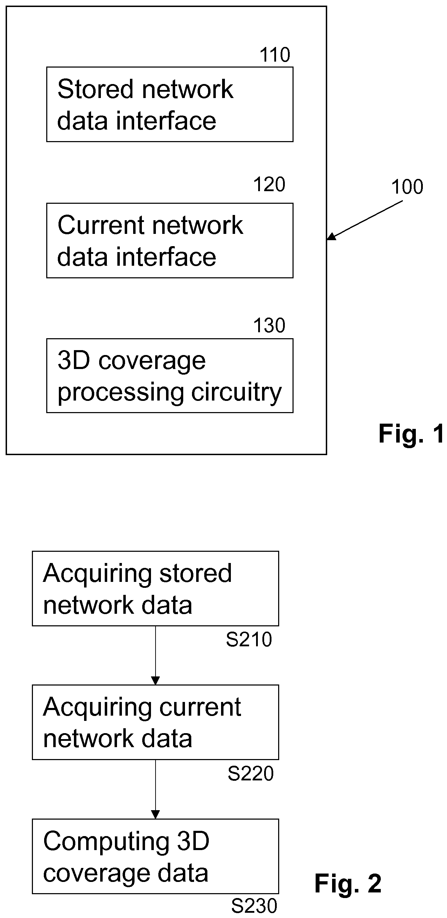

Provided is an apparatus 100 for computing data for guiding a UAV (unmanned aerial vehicles) in a 3D flight area within air space, which is shown in Fig. 1. Herein, a UAV may be a drone or any flying aircraft or in general an aerial vehicle which is fully controlled or assisted by a control or assisting instance such as an aviation center, e.g., aviation authority, UTM service.

In particular, the UAV may be a radio controlled UAV which receives control commands from a remote aviation control node, such as a UTM system or a UAV service provider, via wireless radio network. These control commands may include steering commands such as a change in direction or height or other commands for controlling the flight operation, e.g. power usage or requests for information, such as connectivity measurements.

However, a UAV may also have a lower degree of control corresponding to a higher degree of autonomous operation. In such a case, the UAV may use the radio connection for information for assisting autonomous control, such as navigation information, warnings, requested destinations, or information on traffic such as other UAVs or aerial vehicles, or on weather, as well as transmitting mission critical data to a control center, such as live camera or sensor data from for example, but not limited to, public safety, search and rescue missions.

In this disclosure, the expression "guiding a UAV" or "guiding UAVs" generally refers to command and/or control operations in UAV traffic management and control. For instance, guiding of UAV(s) includes at least one of the permission and prohibition of UAV flights in the flight area or a subsection of the flight area, granting of air traffic control clearances, or the issuance of warnings regarding UAV operability in the flight area or subsections of the flight area. Such operations may be performed by aviation authorities. In addition or alternatively, guiding of UAV(s) may further include at least one of the planning and determination of flight paths or a corridor in the flight area for a UAV flight in advance of a flight of a UAV as well as control and navigation during the UAV flight or flying operation. Therein, the control and navigation may include following a previously determined flight path as well as deviating from the previously determined flight path in view to a current or recent change in network connectivity or other conditions, e.g. weather, in the flight area. "Guiding UAVs" may further include providing data for guiding.

The apparatus is operable for computing data for guiding an UAV or a plurality of UAVs. For instance, if a plurality of UAVs are being operated, the connectivity measurement may be performed by one of the plural UAVs. The UAVs which are guided may include the UAV that has made the measurement and may further include different UAVs. Accordingly, based on an anomaly detected based on a measurement by one UAV, a guiding operation or decision may be made for the same UAV and/or one or more different UAVs.

The apparatus comprises a first interface 110 configured for acquiring, from data storage, stored network data including location data of network nodes of a wireless communication system or network within the flight area. The apparatus further comprises a second interface 120 configured for acquiring current network data including current connectivity data of the network nodes.

The first interface and/or the second interface can be, for instance, a data interface or a communication interface.

The acquiring from data storage may be reception or retrieval of the data.

The data storage may be, for example, a computing or data node such as a server, a database, or a database server. Moreover, the data storage may be an internal storage or memory included in the apparatus, or an external computing node.

The wireless communication network may be a cellular system such as UMTS, LTE or New Radio, 4G, 5G, WiMAX or any other network. Network nodes may include, for example, base stations of the wireless communication systems or networks, such as an eNodeB or similar base station of LTE, which have one or more transmission and reception antennas. However, this disclosure is not limited to the above-mentioned systems, and other terrestrial systems or different systems such as satellite radio systems may be included as well. Accordingly, in addition or as an alternative to base stations, the network nodes may include satellites.

For instance, the location data, or positional data, indicates the positions of the network nodes. In particular, an indication of the coordinates of the antennas or antenna panels included in the network nodes, possibly including a horizontal position and a height of the antenna panels with respect to the ground or some other reference point, e.g. sea level, a point of origin, etc., may be provided. In the case of terrestrial systems such as LTE, the positions of the network nodes are usually fixed for a given operating duration. However, for satellites of a satellite system or other mobile network nodes, the positions of network nodes may vary over time.

The 3D flight area may partially or completely include the area of service of the communication network.

The apparatus further comprises processing circuitry 130 configured for computing current 3D coverage data indicating current network coverage along three dimensions in the 3D flight area. The current 3D coverage data is computed by correlating the stored network data and the current network data.

The apparatus 100 may be a processing node such as a server, an array of servers, or a data base, e.g. a server of a cloud computing service. The apparatus may comprise the data storage (such as a hard disk or a RAM, random access memory), in which case the stored network data is internally stored in the apparatus 100. Alternatively, the stored data may be acquired from an external node.

Apparatus 100 may be operated by and/or deployed at one or more of a service, operator or institution such as communication network operator, an aviation service such as aviation authority, UTM system, or a data processing service providing coverage data for an aviation service, depending on where, e.g. at which of these services, stored and current network data is available.

Furthermore, processing for determining the current 3D coverage data may be split between or distributed among one or processing nodes operated by a network operator, an aviation authority or UTM service, UAV service provider and an intermediate data processing service such as a hub data center between the network operator and the aviation/UAV operator. In such a case, apparatus 100 may constitute a processing system comprising a plurality of processing nodes.

The term "circuitry" refers to processing circuitry such as one or more processors or CPU(s) (central processing unit(s)), and includes hardware components such as ASIC (application specific integrated circuit), FPGA (field programmable gate array), software implementations running on any hardware, or any combination of hardware and software.

In correspondence with apparatus 100, provided is a method for computing data for guiding UAVs in a 3D flight area within airspace, to be performed by apparatus 100. The method comprises acquiring S210 from a data storage stored network data including location data of network nodes of a wireless communication system / network within the flight area, acquiring S220 current network data including current connectivity data of the network nodes, and computing S230 current 3D coverage data indicating current network coverage along three dimensions in the three-dimensional flight area by correlating the stored network data and the current network data.

With the above-disclosed apparatus and method, the present disclosure enables three-dimensional radio network planning, in particular 3D connectivity planning for aviation systems. Moreover, the disclosure enables modeling a current state of a communication network. Thus, the disclosure facilitates satisfying the demands that are imposed on radio network planning and communication in particular by UAV traffic and UTM. Moreover, examination, planning, and optimization of radio signals along flight paths is enabled in three dimensions to be applied by UAVs.

In this description, details, examples and embodiments shall refer to apparatuses as well as methods provided, unless the context or explicit indication indicates otherwise.

Furthermore, the term "connectivity data" refers to any data or information from which a connection status of the network or one or more network nodes of the network is derivable. For instance, the connectivity data may include an indication regarding a current status of a network node, such as an ON state, an OFF state, a network configuration, fault network data, workload, or measurements performed by the network node or by mobile terminals (possibly including UAVs). For instance, the second interface 120 may connect the apparatus 100 to a processing node (e.g. server) of an operator of a wireless communication system or network, from which the data (streaming data, "live" data) are streamed and updated continuously (e.g. frequently at regular intervals, or whenever new connectivity data is received).

The current 3D coverage data comprise parameter(s), metric(s) or indicator(s) which are relevant for indicating or predicting, for a mobile communication device including a connected UAV equipped with one or more SIM(s) (subscriber identity module(s)) or LTE (Long Term Evolution) or 5G module, the ability to connect with a wireless communication network at a given 3D location at a given point in time. E.g., in the computing of 3D coverage data, a mapping between a 3D location within the flight area and one or more parameters indicating a predicted connectivity or connectability at the point is determined for a current point in time or a time interval which is sufficiently small to represent a current coverage status of the network. By determining and making the connectivity-related parameter or metric available for the flight area, a current 3D coverage or 3D coverage status of the communication network/system is obtained. For instance, the 3D location is expressed by geographical coordinates such as WGS 84 (World Geodetic System) or ECEF (earth-centered, earth-fixed) / ECR (earth-centered rotational) coordinates.

The flight area is a three-dimensional (3D) flight area within three-dimensional air space. The flight area is not limited to any particular area size, and may range, for instance, from an urban area to an area equal to or larger than the state area of, e.g., Germany (which is 357 386 km$^2$). For air traffic of UAVs, the height may typically range from ground level to a maximum flight altitude or height which may limited by law or regulations. Exemplary mandated maximum flight heights for UAVs are 500feet above the ground in the USA and about 150 meters above the ground in Europe (see references https://www.faa.gov/news/fact sheets/news story.cfm?newsId=20516]. https://www.eurocontrol.int/sites/default/files/publication/files/uas-atm-cars-v1.0-release-20181127.pdf).

However, the above-mentioned regulations are merely exemplary rather than limiting with respect to the flight area or height for the applicability, as UAVs may in principle fly significantly higher.

For instance, an indication of the flight area is received by an interface, which may be different from the first and second interfaces. For instance, an apparatus (e.g. server) for computing current 3D coverage data may serve a plurality of flight areas. The indication of the flight area may be provided as an identifier of an area or of the starting/takeoff location and/or destination, to which the flight area is then mapped. Alternatively, the apparatus may serve a single configured flight area, in which case an indication of the flight area may not be necessary.

The current 3D coverage data are automatically reported, by an output interface, to one or more aviation control nodes (e.g. server, client, or data base, or cloud) for granting an air traffic control clearance for the UAVs in the flight area or for performing UAV control. The aviation control nodes comprise nodes operated by one or more of aviation authorities, ATM (air traffic management) systems, UAV service providers, UTM systems, or UAV control centers. The current 3D coverage data may be reported to one or more aviation control nodes including the above-mentioned examples. Computing apparatus 100 and the aviation control node may be integrated, e.g. hosted by a single server or commonly operated by an aviation authority. Alternatively, computing apparatus may be operated by an aviation data service provider remote from an aviation authority.

In particular, based on the 3D coverage data, an aviation authority enabled to assess in which parts of the flight area the signal quality is sufficient for granting air traffic of UAVs in particular BVLOS. Accordingly, the aviation authority is enabled to grant an air traffic control clearance for the flight space or parts of the flight space for which a sufficient signal power has been determined.

Moreover, if the 3D coverage data is reported to a UAV control center (e.g. operated by a UAV service provider), the UAV control center is enabled to determine and optimize a flight path or flight paths of UAVs controlled by the UAV control center and/or operated by the UAV service provider.

Accordingly, the present disclosure provides for automatic data transfer to aviation control centers, control systems/devices, UTM systems and similar facilities. This facilitates an exchange of information about safe areas (e.g. sub-areas of the flight area) where signal quality and/or coverage is sufficient for performing flight operations of UAVs. Accordingly, such information becomes available for flight planning and optimization and may contribute to safety in aviation, particularly for UAVs. E.g., UTM may determine an optimal flight path based on the 3D information. For instance, the optimal path as a path having continuous coverage of at least a certain quality or signal strength or the like. Further supplementary criteria for the determination of an optimal flight path may be a change probability or handover probability of the connected network node, which will be described below, a number of handovers, roaming costs, etc.

It should be noted that in some cases, a communication network and an aviation authority or UTM system may be operated by a common operator. Accordingly, current coverage data may be transmitted to the same processing node from which network-specific coverage data over respective input and output interfaces or an integrated input-and-output interface. On the one hand, as mentioned above, the connectivity data may include a current network state such as ON/OFF states of network nodes, workload (number of mobile terminals currently connected to the cell/node), (current) transmission power at the receiver, a current transmission direction, directivity (gain minus masking loss), MIMO (multiple input multiple output) settings, etc., which may be provided by the operator of the network.

Some examples of the current network data included by the connectivity data, may include but are not limited to of network nodes of the respective communication networks:

- Node data or node location data such as Market ID (for the location of the network node); eNodeB ID (network node identification in LTE); Sector Number; eNodeB Name; eNodeB Activity Status; Network node Longitude; Network node Latitude; Network node Altitude; Cell ID (network specific identification of the respective network node); eCGI (E-UTRAN Cell Global Identifier - for unique global identification of the network node); Physical Cell ID; Height of the Antenna position; Antenna (type, name), Antenna Gain; Antenna Azimuth (in degrees relative to absolute north); Antenna Mechanical Downtilt (in degrees relative to the horizontal plain); and
- Antenna parameters or transmission/reception characteristics, such as Reception losses (dB - decibel); Transmitter Transmission losses (dB); Transmitter Max Power (dBm - decibel relative to a Milliwatt); EPRE (Energy Per Resource Element) per antenna port (dB); Total ERP (effective radiated power, W - Watt); Total EIRP (equivalent isotropically radiated power, W).

Regarding the above mentioned node data and node location data, some of the included information may be provided as current network data although location data of network nodes is already included in the stored network data, as mentioned above. However, for stationary network nodes, provision of node or node location data in the current network data may facilitate validating and/or updating the stored network data or the current connectivity state of the network nodes. Furthermore, for moving network nodes such as satellites, the stored network data may for instance include an indication of a planned path of motion of the node, or previous positions of the node, whereas the current network data indicates a current position.

It should be noted that the connectivity data is not restricted to data describing a current status. In addition, "event data", e.g. an indication of known future events, may be received by the second interface, wherein the future events are known to occur at a point in time later than the reporting of the events and the reception at the second interface. Such known future events include future OFF states of network nodes due to planned maintenance or repair works, an installation of a new antenna, or a relocation or removal of an existing network node or antenna. Furthermore, in the case of satellite networks, such known future events may include the launch or startup of a new network satellite or a known correction of an orbit of a satellite.

On the other hand, the current network data may include results of connectivity measurements performed by the UAVs. For instance, a UAV may provide, over an uplink control channel of a wireless communication network, channel measurements to the network, which are then reported, via the second interface 120, to the apparatus 100. Current measurement results, if frequently or regularly provided, may facilitate validating, checking, or updating the current 3D coverage data as well as the current and stored network data at a position from which the UAV has reported the measurement. For instance, measurement results from UAVs may be received from network nodes deployed at or operated by wireless network operators, aviation authorities, UTM systems, or UAV service providers.

Current network data may also include measurements from the running system which are conducted in the network directly, e.g. by means of network probes that monitor the respective interfaces. Such network data is continuously monitored for each IMSI (International Mobile Subscriber Identity), which uniquely identifies respective users of a wireless network. To this end, call trace technologies may be implemented by the operators of the wireless networks. Therein, information about performance of the network generated by the mobile terminals or communication devices, such as reports of connection failure, are collected by the operator on a server or some other entity. Thus, such data can be derived for each UAV or other communication terminal in the network that embodies a SIM (subscriber identity module) card for communication as well as identification. Moreover, the data about performance may be combined with positional data of the reporting mobile communication device. Accordingly, in addition or alternative to measurements by UAVs, the current network data may include measurements performed by other communication terminals or user equipment different from UAVs, such as mobile phones or tablet computers.

Moreover, in some embodiments, the current network data includes an indication of the number of communication terminals per area unit, e.g. a local density of communication terminals. For instance, a current number or an aggregated number of communication terminals per unit area, which is aggregated over a period of time, is provided. The current number of communication terminals per area is reported to the aviation control node, in addition to or included in the 3D coverage data. Such a number of communication terminals per area unit or local density may be determined by computing or collecting positions of communication devices or terminals in a cellular network. Accordingly, by determining a local communication terminal density, a "traffic density map" may be provided, representing highly populated areas, e.g. areas where many people are. Such information may vary over time, as people commute and move over the period of a day, etc.

The information on where people are however may be of very high interest to so called SORA (Specific Operations Risk Assessment) processes for unmanned aviation flight path planning and approval processes. If there is a high risk to cause any damage to people, this area may be decided to become a less preferred area for a UAV to fly over. Providing such data to UTM systems, in addition to the connectivity information, may therefore facilitate increasing the safety of the UAV operation.

For instance, the current 3D coverage data include a prediction of a current signal power, signal strength, or a related parameter such as SNR (signal to noise ratio), SINR (signal to interference plus noise ratio), or interference.

However, the current 3D coverage data is not limited to a signal power or related parameter.

The current 3D coverage data include an indication of a handover probability by the UAV from one network node to another network node. The handover probability is a change probability of a change of the network node, from among the network nodes of the communication network or system, with which a UAV is currently connected. The change probability is a probability with which the UAV will switch connections from one network node to another network node.

The provision of a handover probability, which may also be switching probability, of an active connection from one network node to another network node, may facilitate the choice of a stable and lasting connection particularly when the connected device such as a UAV is moving in air space at a certain height (e.g. 150 m) above ground. This is because at such height, a plurality of network nodes possibly having similar signal powers may be identified by the UAV, depending, e.g., on topography, network design, and position of network nodes as well as of the UAV. Moreover, a UAV may not necessarily change or switch network nodes immediately whenever another network node is detected to have a stronger signal power than the network node to which the UAV is currently connected. For instance, to prevent too frequent switching, a change of network nodes may be performed only when the signal of the other, unconnected network node is determined to be significantly stronger for a given time interval.

For instance, the handover probability may be dependent on at least one of a location, a moving speed, a moving direction, and an envisaged or planned flight path or trajectory of the UAV.

For instance, for a mobile receiver (e.g. UAV) to change from one network node A (best serving network node) to another network node B, the signal received at the UAV from network node B has to exceed the signal level network node A by a defined threshold, a delta greater than zero. Also, this signal has to be continuously better for a defined time interval. Only if the received signal from Node B is better by a defined signal delta - a handover-threshold - for the duration of a given time, the serving node will be changed.

Based on the above-mentioned or other rules for a change between network nodes, a change probability may be predicted by comparing the signal strengths of different network nodes in the flight area or along a planned or flight path or a plurality of possible flight paths of an UAV.

Alternatively, the determination of a change probability may be based on a count of handovers of UAVs which have actually been performed per area in a given time interval.

Alternatively, rather than outputting a handover probability, the determination of a signal power may take into account the above-mentioned handover threshold or a bias for the network node with which the UAV is currently connected.

In wireless networks, the change of serving nodes is one of the dominant risks for connectivity loss. Therefore, for fast moving UAVs, who have a very different visibility to signals from various network nodes - compared to terrestrial users, the 3D areas with high probability of network node changes are less suitable for safe UAV BVLOS operation. Thus, the provision of a change probability of a change of connections of a UAV among network nodes may facilitate determination of safe regions for UAV traffic within the 3D flight area.

The provision of the handover probability (or a probability of handover between network nodes / cells) of a currently connected network node may facilitate optimization of flight paths by UAV service providers in view of a stable connection and or in view of saving energy and processing power otherwise needed for monitoring the signal strengths of network nodes or switching operations.

By outputting 3D coverage data including the above-mentioned parameters such as a signal power and a handover probability, an operator of UAV traffic or a UAV service is enabled to find an optimized flight corridor and /or flight path for a desired destination and/or for a rough flight path input. This may be performed by minimizing a cost function including at least one of these above mentioned parameters or additional parameters (e.g. energy consumption of UAVs, desired flight altitude, roaming costs, number of people or communication terminals per area unit within the flight corridor, etc.,) in order to obtain the optimum path or desired path or a corridor within the flight area with acceptable features, or the like. Operation of the aviation system, e.g. UAV flight scheduling and controlling and determination of flight paths or flight corridors for the UAVs and controlling of the UAVs within the corridor or on the flight path may be performed based on the optimization.

Moreover, in addition to network data, the stored data acquired from the data storage may comprise topography or terrain data indicating a topography of a surface area covered by the three-dimensional flight area (a surface area below the flight area). The topography data may include a terrain (e.g. mountains, bodies of water, vegetation, gradients), and shapes of buildings.

In addition to the network data and possibly topography data, weather data may be received over the first interface 110 and/or the second interface 120 or another interface. The weather indicates measured, predicted, and/or stored / recorded (e.g. historical) weather conditions in the flight area. The weather conditions may include the presence or absence of a snow or ice cover on the ground surface, wet surfaces, fog, rainfall, or snowfall, and/or seasonal properties such as foliation conditions. The provision of weather data may facilitate accurately determining 3D coverage since weather conditions including the aforementioned examples may have significant impact on signal quality in view of radio wave propagation characteristics such as reflection or dispersion caused by such weather phenomena.

Sources of the weather data may include weather stations providing predictions and/or measurements, satellites, radar measurements, as well as camera images which are then subjected to pattern recognition in order to extract information about weather conditions. E.g., the weather data may include photo images recorded by UAVs.

In some embodiments, the stored network data and the current network data include network data provided from a plurality of wireless communication networks or systems and indicating network properties these plural wireless communication networks. The plurality of communication networks may include one or more terrestrial radio networks implementing systems such as 4G, LTE, LTE-Advanced, "ultra long range" LTE systems which also provide airplanes travelling at 10 000 m altitude with broadband internet connections, 5G (e.g. 3GPP New Radio, NR) possibly operated by different operators, or further developments of such systems particularly adapted to the requirements of aviation, satellite radio networks, in particular LEO (low earth orbit) systems providing a sufficiently low latency, hybrid systems which include both earth-based as well as satellites or other air or space travelling network nodes. In addition to or instead of satellites, a communication system may have aerial vehicles such as airplanes or gas balloons, or UAVs as network nodes.

By acquiring stored and/or current data from a plurality of communication networks or systems, a UAV may be enabled to select a network node for connecting from a larger number of network nodes. Such redundancy may facilitate extending 3D coverage, maintaining connectivity during a UAV flight, and increasing safety in UAV operation.

For instance, apparatus 100 may acquire network data from a plurality of networks if operated by an operator of a plurality of networks. On the one hand, apparatus 100 may combine the data from the plurality of networks. On the other hand, in general, current coverage data including parameters which indicate a current connectivity are calculated per respective communication network. A combination or fusion of coverage data of different networks may be performed after the current coverage data has been generated per respective network. For instance, apparatus 100 computes and outputs single-network coverage data or network-specific coverage data.

For instance, the above-mentioned handover probability (the probability of a change of a network node to which the UAV is currently connected) may comprise the following cases: handover probability between network nodes of the same network, handover probability between network nodes of respectively different networks, or handover probability between network node irrespective of whether the handover is performed within a single network or between networks.

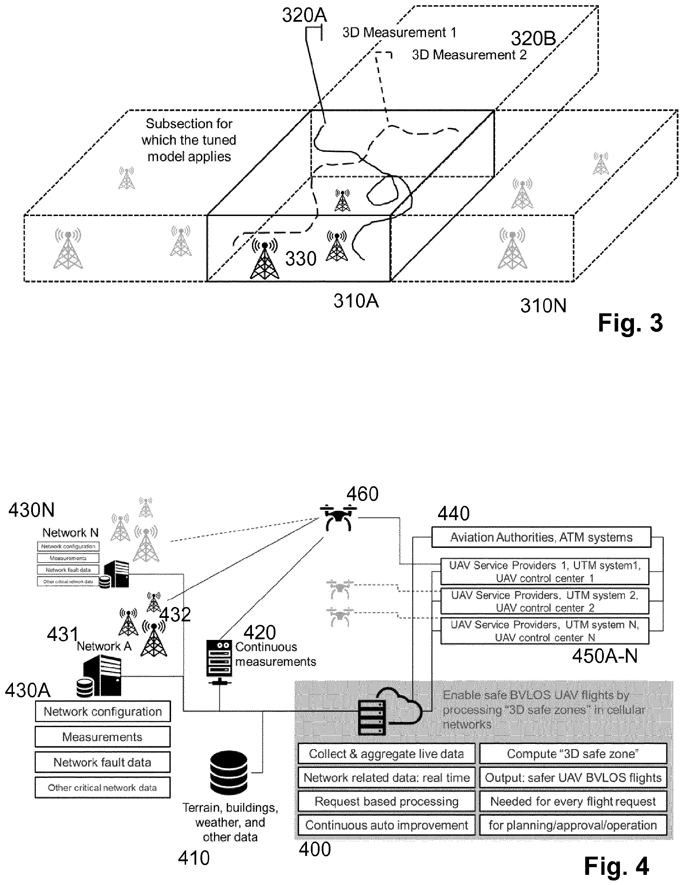

In some embodiments, the three-dimensional area is subdivided into a plurality of sub-areas (or subsections), and current 3D coverage data is computed respectively for the plurality of 3D sub-areas (or area elements) of the flight area. An example of a division of the flight area into sub-areas is shown in Fig. 3. As can be seen, the subsections may have a substantially cube or cuboid shape (seen in a flat map/projection of the earth surface). For instance, cuboid may have sizes of 10km $\times$ 10km (horizontal directions) $\times$ 500 m (vertical direction), although the disclosure is not limited to particular sizes of subsections, and larger or smaller subsections may be used as well. For instance. Although not shown in Fig. 3, there may be one or more layers of cubes in vertical direction, such as a lower layer comprising takeoff and landing heights and a higher layer comprising travelling heights.

Furthermore, there may be a hierarchically layered division or partition of the flight area. For instance, a first layer of sub-areas may be "tiles" of 1° by 1° in longitude and latitude in WGS 84 coordinate system, which equals about 60 nautical miles in each direction at the equator. These tiles may then, as a second hierarchical layer of sub-areas, further be subdivided into subsections or "sub-tiles" (the size of which may be, e.g., the above-mentioned 10km x 10 km x 500 m).

Stored and/or current data such as terrain/topography, land use and, or the availability of measured connectivity data from UAVs may be obtained by apparatus 100 respectively per sub-area. Moreover, the division into sub-areas may be made in accordance with the aforementioned data or other data. Accordingly, sub-areas where many measurements by UAVs have been recorded may achieve a greater degree of precision in the determination of 3D coverage data. Thus, a comparability of different sub-areas with respect to model quality (or data quality or prediction quality) is provided. For instance, in addition to the above-mentioned signal power and change probability of a network node the UAV is connected to, the quantity and/or quality of measured data per sub-area may be included in the 3D coverage data.

For instance, the computing of the current 3D coverage data may be performed based on a model for predicting 3D coverage, and the model may be generated based on the stored network data and automatically updated based on the current network data.

By automatically updating (or tuning) the model, the prediction or computation of the 3D coverage data is kept in line with a current coverage or connectivity state of the flight area. In order to represent a current status of the 3D network coverage in the flight area, data updates and, consequently, model updates, may be performed "real time" or whenever any change happens to the current network data, or whenever new measurement data such as a single new measured value or a file of measurement data, is available, to satisfy the requirements imposed by above-mentioned guiding operations such as air traffic control clearances for UAVs or control of UAVs. Accordingly, intervals between model updates may be fixed or variable.

In addition to the stored network data, the generation of the model may be based on the above-mentioned topological data. In addition, the current data provided to the model may include network data/connectivity data as well as the above-mentioned weather data.

Moreover, new current values may be compared with historical values received under similar weather or network conditions, a plausibility of new values may thereby be tested.

For instance, the model is updated by machine learning.

In the computing of the current 3D coverage data, one or more of the following exemplary computations may be performed, possibly using machine learning:

- Interpolation between two measured values along a flight path of a UAV, in order to obtain a value of the same quality at a point (3D position) along the flight path where no measurement has been performed.
- Interpolation of measured values of a quantity (e.g. signal power) between positions on two respective flight paths of two UAVs (see Fig. 3) may be performed, to obtain value of the same quantity for a point in an area surrounding the two flight paths.
- Extrapolation from two or more measured values along a flight path of a UAV, in order to obtain a value along the expected flight path yet to come.
- A new current data item or data point may be evaluated against previous data items or data points, in order to improve the robustness of the model. Thus, if a new update of current data is received, previous data values received earlier as past current data need not be discarded.
- Comparison of new current data values may be compared with historical values received under similar weather or network conditions, a plausibility of new values may thereby be tested.
- Combining different data sources (possibly including unstructured and /or structured data and data having various degrees of structure), harmonizing, combining, and correlating the data, and computing analyses of network coverage.
- Enriching historical input data by means of additional data points such that 3D subsections experience enhanced reliability and accuracy of the output (see Fig. 3).
- Applying machine learning mechanisms such as supervised or unsupervised learning to train the modelling for continuous enhancements.
- Utilizing the learnings from the subsections with many measurements available and applying the results to other subsections without measurements (see Fig.3), whereas the applicability of the models from subsection 310A to another subsection 310N is derived from correlating and combining different input data such as terrain, vegetation and weather information in the respective subsection.

By combining different kinds of data and calculating models, predictions of 3D coverage and quality of connectivity can be computed and processed, which may facilitate estimation or assessment of risks of UAV air traffic. Accordingly, safety enhancements may be provided.

Moreover, continuous incorporation of measured data, e.g. data received from UAVs, and correlating the data with stored data and other network data may facilitate automatic calibration of a prediction model for 3D coverage and make models more robust.

Furthermore, machine learning may facilitate automatically making the model more precise when new current data is received and incorporated. Thus, a single new value such as an outlier can be prevented from unduly influencing the results of the model.

As mentioned above, a flight area may be divided into sub-areas, wherein a hierarchically layered partitioning may be applied. In the following, it is described with reference to Fig. 3 how such a subdivision of the flight area may be applied to model calibration or model tuning. For instance, the cuboids depicted in Fig. 3 as sub-areas may be the above-mentioned subsections of the WGS-84-1-by-1-sized tiles.

For instance, these tiles or the flight area may be divided into subsections or sub-areas for tuning, depending on where there are measurements available. If a new measurement is received, for instance in a measurement file, a 3D bounding rectangle or cuboid is generated around these measurements as a sub-area, and in this sub-area, the modelling specifically to these measurements. This very specific model is then applied to all the network nodes included in that bounding rectangle or cuboid. Hence, the modelling accuracy is enhanced in this sub-area for which the measurements have been obtained. In addition, the tuning with these measurements may also be applied for other regions in the flight area or the entire flight area. Accordingly, even in places or regions from where no measurements are available, the models are incrementally enhanced, but in the subsections or sub-areas where the measurements are actually performed, the accuracy will be greater.

Accordingly, model tuning, as disclosed, is applicable, for a given section or subsection of the flight area, with only a limited number of measurement values are currently available, but expected to grow in the future. Namely, in an incremental way, by automatic learning mechanisms, the models will get better, i.e. more accurate and more reliable, whenever a new measurement is performed and new measured data is obtained. Applicable to all sites in the "tiles", and specifically the case in the sub-tiles (subsections).

An exemplary model for estimating coverage based on current and stored network data may include the following path loss and link budget equation (1) for determining a power of a signal at a receiver (e.g. a UAV on a flight path in the flight area) at a given location:

$$P_R = P_T + G(\varphi,\theta) - PL(d,h), \qquad \text{equation (1)}$$

where

- $P_R$ is the power at the receiver (dBm, decibel-milliwatts);
- $P_T$ is the (transmission) power of the transmitter / antenna / cell (dBm);
- d is the distance between transmitter and receiver in meters;
- h is the height above ground (flight height) of the UAV in meters;
- $\varphi$ and $\theta$ are the relative azimuth and elevation (view angles) of the UAV, as seen from the cell (e.g. taking the mechanical tilt / antenna tilt and azimuth into account); and
- $G(\varphi,\theta)$ is the directivity (gain minus masking loss) of the cell/antenna; and
- PL(d,h) is the path loss.

For the determination / estimation of the path loss, a general model in accordance with the following equation (2) may be used:

$$PL(d,h) = (\alpha_1 + \alpha_2 \cdot \log(h)) \cdot \log(d) + \beta_1 + \beta_2 \cdot \log(h) \qquad \text{equation(2)}.$$

The coefficient $\alpha_2$ is negative (forced by constraints in the tuning process), so the path loss exponent $\alpha(h) = (\alpha_1 + \alpha_2 \cdot \log(h)) \cdot \log(d)$ is decreasing with increasing height. $\beta_2$ can be both positive and negative. In order to prevent the model coefficients dropping below the coefficients of a free space model at a given height $h_0$, for $h > h_0$, the coefficients are fixed with their value at $h_0$, $\alpha(h) = \alpha(h_0)$ and $\beta(h) = \beta(h_0)$ for $h \geq h_0$. This fixing of coefficients may prevent the model from underestimating the path loss at large heights.

For instance, the following coefficients from equation (3) are derived from tuning with UAV measurement data. They may be used in a default model, i.e. in an area where no measurement data is available as input into the system, for the frequency of 800 MHz:

$$PL(d,h) = (27.105 - 1.63149 \cdot \log(h)) \cdot \log(d) + 31.3353 + 0.735305 \cdot \log(h)$$

$$\text{equation (3)}.$$

For other frequencies, frequency-correcting terms are applied to the constant coefficients $\alpha_1$, $\alpha_2$, $\beta_1$, and $\beta_2$ of the model.

Based on more measurement data available, and more advanced models being developed, additional coefficients and model components describing physical behavior may be added.

In case that measurement data is available in a specific subsection or sub-area of the 3D airspace, dedicated advanced algorithms and machine learning methods may be applied to automatically enhance the model by tuning it with the respective measurement data.

Fig. 3 shows an example where a 3D airspace is divided into subsection 310A to 310N. In subsection 310A radio signal measurements in 3D are available, 320A and 320B. The model within subsection 310A will now be tuned using measurement 320A. Then, this model will be applied to the network nodes 330, which are within the subsection 310A.

The subsection could also be adaptively formed around the first available measurement 320A, such that the subsection is defined by a bounding rectangle around the measurements.

With the availability of more measurements within subsection 310A, such as 320A and 320B, machine learning algorithms will enhance the tuning accuracy and reliability by means of Supervised Learning methods.

Supervised learning in this context is the machine learning task of learning the function that maps the measurement input data to the output of the tuned output modelling. It infers the model function from the labeled training data consisting of the measurement data and the output model. With each additional input data the algorithms analyze the historical training data together with the new data samples and produces an inferred function that will then be used for the processing of new examples.

For instance, measured values of a parameter such as a signal power are input into the machine learning process. As an output, a model of the signal power is provided, which is based on previously received stored data of the signal strength and updated with each newly received current measurement value or data item. Furthermore, constraints such as weather, current state or configuration of the network, or terrain may be input into the learning process.

In subsections where no measurement data is available, such as 310N, models will be applied to the respective network nodes within that subsection, which are based on a plurality of measurements available for other subsections, as exemplified above by equation 3, but not specific to the targeted 3D sub-area or subsection.

Fig. 4 shows an exemplary system for guiding UAVs, wherein the apparatus 100 is embodied by a computing node 400. Computing node 400 is connected, over a plurality of interfaces, to a plurality of networks (Network A ..., network N ) 430A-N respectively including a network server 431 and network nodes (base station including transmission/reception antennas) such as network node 432, an Aviation Authorities or ATM system as aviation control node 440, a plurality of UAV service providers 450A-N, a data server 410 or database server storing data, about terrain (topography), buildings, weather, and other data, as well as a data processing server 420, continuously or regularly receiving and forwarding (current) measurements (e.g. signal, channel measurements) from one or more UAVs (including UAV 460). In Fig. 4, computing node 400 is shown as a server of a cloud computing service.

As shown in Fig. 4, computing node 400 as an instance of apparatus 100 is directly connected to aviation control nodes 400, 450A-N which perform the guiding of the UAV or UAVs.

However, the present disclosure is not limited to the output interface being directly connected to the aviation control node. For instance, network-specific current coverage data may be transmitted to an intermediate data node such as a data hub which generates plural-network coverage data by combining network-specific coverage data of a plurality of communication networks.

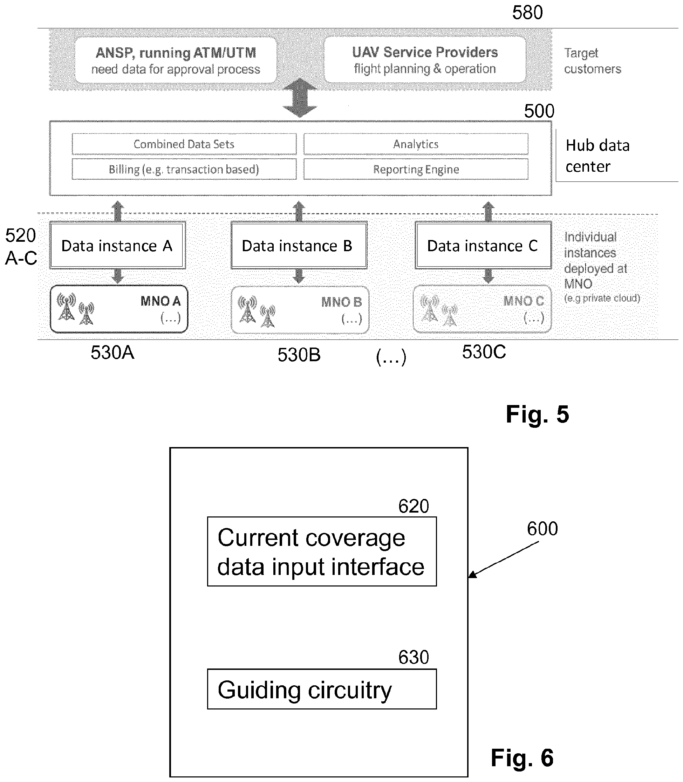

For instance, Fig. 5 shows apparatus 100 embodied by a plurality of data instances 520A-C deployed at a plurality of mobile network operators (MNOs) 530A-C. This disclosure is not limited to the number of MNOs being three as the Figure shows an example. Each of data instances 520A-C is connected to a data hub or hub data center 500 where the network-specific coverage data is combined or aggregated to generate plural-network coverage data. Hub data center 500 outputs combined plural-network coverage data to an aviation control node 580, such as an ANSP (air navigation service provider), ATM or UTM, or UAV service provider.

Accordingly, in this disclosure, "automatically reporting" of current 3D coverage data includes direct report reporting from apparatus 100 to the aviation control node as well as indirect reporting via an intermediate node such as a data hub which performs additional processing such as combining of respective network-specific coverage data.

The structure of nodes (e.g. servers) and connections / interfaces between nodes as shown in Fig. 4, as well as the usage and numbering of the term "interface" not used in a limiting manner in the present application. For instance, first interface 110 by which stored data is obtained may be an internal interface to a data storage comprised by apparatus 100, or an external interface to an external database. Moreover, the stored data may be regularly updated, for instance by new network information received from network operators and/or by feedback from the above-mentioned machine learning process.

The second interface 120 by which current data is obtained may comprise a plurality of physical or virtual interfaces to a plurality of data nodes from which different data (e.g. continuous measurements by UAVs, weather data, network data) are received. Likewise, the output interface may comprise a plurality of interfaces to one or more among aviation authorities, ATM systems, and one or more UAV service providers (UAV control centers / UTM systems).

In addition to the above-described apparatus and method for computing data for guiding an unmanned aerial vehicle, this disclosure provides an aviation control node and an aviation control method for guiding a UAV in a 3D area within airspace.

Aviation control node 600, which is shown in Fig. 6, comprises an input interface configured for acquiring current 3D coverage data indicating current network coverage along three dimensions in the three-dimensional flight area, wherein the 3D coverage data is determined by correlating stored network data including location data of network nodes of a wireless communication network and current network data including current connectivity data of the network nodes.

Aviation control node 600 further comprises guiding circuitry 630 configured for performing the guiding of the UAV based on the current 3D coverage data.

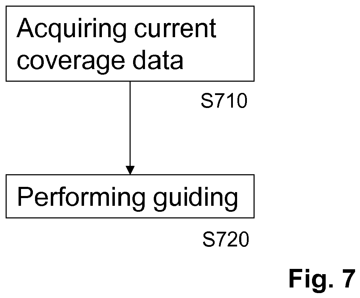

Correspondingly, as shown in Fig. 7, the aviation control method comprises a step S710 of acquiring current 3D coverage data indicating current network coverage along three dimensions in the three-dimensional flight area, the 3D coverage data being determined by correlating stored network data including location data of network nodes of a wireless communication network and current network data including current connectivity data of the network nodes.

3D coverage data may be computed or determined by aviation control node 600 or by a computing node such as apparatus 100 or hub data center 500.

Further, the aviation control method comprises a step S720 of performing the guiding of the UAV based on the current 3D coverage data.

For instance, in the case of guiding UAVs, the guiding node 600 may correspond to a computing node at an ANSP, aviation authority, UAV service provider or UTM system, such as aviation authorities/ATM systems 440 and UAV service providers / UTM systems 450A-N shown in Fig. 4 or aviation control node 580 shown in Fig. 4. "Guiding UAVs" corresponds to the usage of this term in the above description. Guiding also comprises providing data for guiding.

Moreover, the term "interface" refers to an input and/or output processing structure which may include one or more protocol layers defining in which format the data are received or transmitted and how the data are to be interpreted. Such interface may be wired or wireless.

It should be further noted that "UAV" generally refers to aerial vehicles which are not controlled by an on-board pilot. However, a UAV may for example carry cargo, optical or other measurement equipment (e.g. a camera), as well as passengers (e.g. an air taxi).

Summarizing, the present disclosure provides an apparatus and a method for computing data for guiding unmanned aerial vehicles (UAVs) in a three-dimensional (3D) air space. Stored network data including location data of network nodes as well as current network data including current connectivity data of the network nodes are acquired. By correlating the stored and current network data, current 3D coverage data indicating current network coverage along three dimensions in the 3D flight area are determined. The techniques of the present disclosure enable modeling and predicting a current coverage and connectivity state of 3D air space and facilitates control and operation of UAV air traffic.

**Claims**

1. Apparatus (100) for computing data for guiding an unmanned aerial vehicle (460), UAV, in a three-dimensional, 3D, flight area within airspace, comprising:

   a first interface (110) configured for acquiring, from a data storage, stored network data including location data of network nodes of a wireless communication network within the flight area;
   a second interface (120) configured for acquiring current network data including current connectivity data of the network nodes;
   circuitry (130) configured for computing current 3D coverage data indicating current network coverage along three dimensions in the 3D flight area by correlating the stored network data and the current network data; and
   output interface configured for automatically reporting the current 3D coverage data to an aviation control node for granting an air traffic control clearance for the UAV (460) in the flight area or for performing control of the UAV (460),
   wherein the current 3D coverage data include an indication of a handover probability of handover by the UAV (460) from one network node to another network node.

2. The apparatus (100) according to claim 1, wherein the second interface is configured for receiving event data indicating known future network events known to occur at the network nodes at a time later than receiving the event data.

3. The apparatus (100) according to any of claims 1 or 2, wherein the current network data include results of connectivity measurements performed by the UAV or a communication terminal different from the UAV.

4. The apparatus (100) according to claim 1, wherein the current network data include an indication of a current number, or aggregated number over a period of time, of communication terminals per area unit, and the output interface reports that number of communication terminals per area to the aviation control node.

5. The apparatus (100) according to any of claims 1 to 4, wherein the current 3D coverage data include a signal power.

6. The apparatus (100) according to claim 1, wherein the handover probability depends on at least one of the moving speed and the moving direction of the UAV.

7. The apparatus (100) according to any of claims 1 to 6, wherein the stored network data and the current network data include data of a plurality of wireless communication networks.

8. The apparatus (100) according to any of claims 1 to 7, wherein the three-dimensional flight area is subdivided into a plurality of sub-areas, and the circuitry is configured for computing the current 3D coverage data respectively for the plurality of sub-areas.

9. The apparatus (100) according to any of claims 1 to 8, wherein the circuitry is configured for computing the current 3D coverage data based on a model for predicting 3D coverage, and the model is generated based on the stored network data and automatically updated based on the current network data.

10. The apparatus (100) according to claim 9, wherein the model is updated by machine learning.

11. Aviation control node (600) for guiding an unmanned aerial vehicle (460), UAV, in a three-dimensional, 3D, flight area within airspace, comprising:

an input interface (620) configured for acquiring automatically reported current 3D coverage data indicating current network coverage along three dimensions in the three-dimensional flight area, the 3D coverage data being determined by correlating stored network data including location data of network nodes of a wireless communication network within the flight area and current network data including current connectivity data of the network nodes; and
circuitry (630) configured for performing the guiding of the UAV (460) or for granting an air traffic control clearance for the UAV (460) in the flight area based on the current 3D coverage data
wherein the current 3D coverage data include an indication of a handover probability of handover by the UAV (460) from one network node to another network node.

12. Method for computing data for guiding unmanned aerial vehicles, UAVs, in a three-dimensional, 3D, flight area within airspace, comprising:

acquiring (S210), from a data storage, stored network data including location data of network nodes of a wireless communication network within the flight area;
acquiring (S220) current network data including current connectivity data of the network nodes; and
computing (S230) current 3D coverage data indicating current network coverage along three dimensions in the three-dimensional flight area by correlating the stored network data and the current network data; and
automatically reporting the current 3D coverage data to an aviation control node for granting an air traffic control clearance for the UAV (460) in the flight area or for performing control of the UAV (460);
wherein the current 3D coverage data include an indication of a handover probability of handover by the UAV from one network node to another network node.

13. Aviation control method for guiding an unmanned aerial vehicle, UAV, in a three-dimensional, 3D, flight area within airspace, comprising:

acquiring (S710) automatically reported current 3D coverage data indicating current network coverage along three dimensions in the three-dimensional flight area, the 3D coverage data being determined by correlating stored network data including location data of network nodes of a wireless communication network within the flight area and current network data including current connectivity data of the network nodes; and
performing (S720) the guiding of the UAV or granting an air traffic control clearance for the UAV (460) in the flight area based on the current 3D coverage data;
wherein the current 3D coverage data include an indication of a handover probability of handover by the UAV from one network node to another network node.

**Patentansprüche**

1. Vorrichtung (100) zum Berechnen von Daten zum Führen eines unbemannten Fluggerätes (unmanned aerial vehicle - UAV) (460) in einem dreidimensionalen Fluggebiet innerhalb eines Luftraums, umfassend:

eine erste Schnittstelle (110), die so konfiguriert ist, dass sie gespeicherte Netzdaten einschließlich Standortdaten von Netzknoten eines drahtlosen Kommunikationsnetzes innerhalb des Fluggebietes von einem Datenspeicher erfasst;
eine zweite Schnittstelle (120), die so konfiguriert ist, dass sie aktuelle Netzdaten einschließlich aktueller Konnektivitäts-Daten der Netzknoten erfasst;
eine Schaltung (130), die so konfiguriert ist, dass sie aktuelle dreidimensionale Abdeckungsdaten berechnet, die aktuelle Netzabdeckung in drei Dimensionen in dem dreidimensionalen Fluggebiet anzeigen, indem sie die gespeicherten Netzdaten und die aktuellen Netzdaten korreliert; sowie

eine Ausgabeschnittstelle, die so konfiguriert ist, dass sie automatisch die aktuellen dreidimensionalen Abdeckungsdaten an einen Luftverkehrs-Kontrollknoten meldet, um eine Flugverkehrskontroll-Freigabe für das UAV (460) in dem Fluggebiet zu erteilen oder um Steuerung des UAV durchzuführen, wobei

die aktuellen dreidimensionalen Abdeckungsdaten eine Angabe einer Handover-Wahrscheinlichkeit von Handover durch das UAV (460) von einem Netzknoten zu einem anderen Netzknoten einschließen.

2. Vorrichtung (100) nach Anspruch 1, wobei die zweite Schnittstelle so konfiguriert ist, dass sie Ereignisdaten empfängt, die bekannte zukünftige Netzereignisse anzeigen, von denen bekannt ist, dass sie an den Netzknoten zu einem späteren Zeitpunkt als dem Empfang der Ereignisdaten auftreten.

3. Vorrichtung (100) nach einem der Ansprüche 1 oder 2, wobei die aktuellen Netzdaten Ergebnisse von Konnektivitäts-Messungen enthalten, die von dem UAV oder einem anderen Kommunikations-Endgerät als dem UAV durchgeführt werden.

4. Vorrichtung (100) nach Anspruch 1, wobei die aktuellen Netzdaten eine Angabe einer aktuellen Anzahl oder einer über einen Zeitraum aggregierten Anzahl von Kommunikations-Endgeräten pro Flächeneinheit enthalten, und die Ausgabeschnittstelle die Anzahl von Kommunikations-Endgeräten pro Fläche an den Luftverkehrs-Kontrollknoten meldet.

5. Vorrichtung (100) nach einem der Ansprüche 1 bis 4, wobei die aktuellen dreidimensionalen Abdeckungsdaten eine Signalleistung einschließen.

6. Vorrichtung (100) nach Anspruch 1, wobei die Handover-Wahrscheinlichkeit von der Bewegungsgeschwindigkeit oder/und der Bewegungsrichtung des UAV abhängt.

7. Vorrichtung (100) nach einem der Ansprüche 1 bis 6, wobei die gespeicherten Netzdaten und die aktuellen Netzdaten Daten einer Vielzahl von drahtlosen Kommunikationsnetzen einschließen.

8. Vorrichtung (100) nach einem der Ansprüche 1 bis 7, wobei das dreidimensionale Fluggebiet in eine Vielzahl von Teilgebieten unterteilt ist und die Schaltung so konfiguriert ist, dass sie die aktuellen dreidimensionalen Abdeckungsdaten jeweils für die Vielzahl von Teilgebieten berechnet.

9. Vorrichtung (100) nach einem der Ansprüche 1 bis 8, wobei die Schaltung so konfiguriert ist, dass sie die aktuellen dreidimensionalen Abdeckungsdaten auf Basis eines Modells zum Vorhersagen dreidimensionaler Abdeckung berechnet, und das Modell auf Basis der gespeicherten Netzdaten erzeugt und auf Basis der aktuellen Netzdaten automatisch aktualisiert wird.

10. Vorrichtung (100) nach Anspruch 9, wobei das Modell mittels maschinellen Lernens aktualisiert wird.

11. Luftverkehrs-Kontrollknoten (600) zum Führen eines unbemannten Fluggerätes (unmanned aerial vehicle - UAV) (460) in einem dreidimensionalen Fluggebiet innerhalb eines Luftraums, umfassend:

eine Eingabeschnittstelle (620), die so konfiguriert ist, dass sie automatisch gemeldete aktuelle dreidimensionale Abdeckungsdaten erfasst, die aktuelle Netzabdeckung in drei Dimensionen in dem dreidimensionalen Fluggebiet anzeigen, wobei die dreidimensionalen Abdeckungsdaten bestimmt werden, indem gespeicherte Netzdaten, die Standortdaten von Netzknoten eines drahtlosen Kommunikationsnetzes innerhalb des Fluggebietes einschließen, und aktuelle Netzdaten korreliert werden, die aktuelle Konnektivitäts-Daten der Netzknoten einschließen; sowie

eine Schaltung (130), die so konfiguriert ist, dass sie das Führen des UAV (64) durchführt oder Flugverkehrskontroll-Freigabe für das UAV (460) in dem Fluggebiet auf Basis der aktuellen dreidimensionalen Abdeckungsdaten erteilt, wobei

die aktuellen dreidimensionalen Abdeckungsdaten eine Angabe einer Handover-Wahrscheinlichkeit von Handover durch das UAV (460) von einem Netzknoten zu einem anderen Netzknoten einschließen.

12. Verfahren zum Berechnen von Daten zum Führen unbemannter Fluggeräte (unmanned aerial vehicles - UAVs) (460) in einem dreidimensionalen Fluggebiet innerhalb eines Luftraums, umfassend:

Erfassen (S210) gespeicherter Netzdaten einschließlich Standortdaten von Netzknoten eines drahtlosen Kommunikationsnetzes innerhalb des Fluggebietes von einem Datenspeicher;

Erfassen (S220) aktueller Netzdaten einschließlich aktueller Konnektivitäts-Daten der Netzknoten; sowie

Berechnen (S230) aktueller dreidimensionaler Abdeckungsdaten, die aktuelle Netzabdeckung in drei Dimensionen in dem dreidimensionalen Fluggebiet anzeigen, durch Korrelieren der gespeicherten Netzdaten und der aktuellen Netzdaten; sowie

automatisches Melden der aktuellen dreidimensionalen Abdeckungsdaten an einen Luftverkehrs-Kontrollknoten, um eine Flugverkehrskontroll-Freigabe für das UAV (460) in dem Fluggebiet zu erteilen oder um Steuerung des UAV durchzuführen;

wobei

die aktuellen dreidimensionalen Abdeckungsdaten eine Angabe einer Handover-Wahrscheinlichkeit von Handover durch das UAV von einem Netzknoten zu einem anderen Netzknoten einschließen.

13. Luftverkehrs-Kontrollverfahren (600) zum Führen eines unbemannten Fluggerätes (unmanned aerial vehicle - UAV) in einem dreidimensionalen Fluggebiet innerhalb eines Luftraums, umfassend:

Erfassen (S710) automatisch gemeldeter aktueller dreidimensionaler Abdeckungsdaten, die aktuelle Netzabdeckung in drei Dimensionen in dem dreidimensionalen Fluggebiet anzeigen, wobei die dreidimensionalen Abdeckungsdaten bestimmt werden, indem gespeicherte Netzdaten, die Standortdaten von Netzknoten eines drahtlosen Kommunikationsnetzes innerhalb des Fluggebietes einschließen, und aktuelle Netzdaten korreliert werden, die aktuelle Konnektivitäts-Daten der Netzknoten einschließen; sowie

Durchführen (S720) des Führens des UAV oder Erteilung einer Flugverkehrskontroll-Freigabe für das UAV (460) in dem Fluggebiet auf Basis der aktuellen dreidimensionalen Abdeckungsdaten;

wobei

die aktuellen dreidimensionalen Abdeckungsdaten eine Angabe einer Handover-Wahrscheinlichkeit von Handover durch das UAV von einem Netzknoten zu einem anderen Netzknoten einschließen.

## Revendications

1. Appareil (100) pour traiter des données pour guider un véhicule aérien sans pilote, UAV (Unmanned Aerial Vehicle), (460) dans une zone de vol tridimensionnelle, 3D, au sein d'un espace aérien, comprenant :

une première interface (110) configurée pour acquérir, d'un stockage de données, des données de réseau stockées incluant des données de localisation de noeuds de réseau d'un réseau de communication sans fil au sein de la zone de vol ;

une deuxième interface (120) configurée pour acquérir des données de réseau courantes incluant des données de connectivité courantes des noeuds de réseau ;

un circuit (130) configuré pour traiter des données de couverture 3D courantes indiquant une couverture de réseau courante sur trois dimensions dans la zone de vol 3D en corrélant les données de réseau stockées et les données de réseau courantes ; et

une interface de sortie configurée pour rapporter automatiquement les données de couverture 3D courantes à un noeud de contrôle d'aviation pour accorder une autorisation d'un contrôle de trafic aérien pour l'UAV (460) dans la zone de vol ou pour procéder à un contrôle de l'UAV (460),

dans lequel

les données de couverture 3D courantes incluent une indication d'une probabilité de transfert de transfert par l'UAV (460) d'un noeud de réseau vers un autre noeud de réseau.

2. L'appareil (100) selon la revendication 1, dans lequel la deuxième interface est configurée pour recevoir des données d'événement indiquant des événements de réseau ultérieurs connus connus pour survenir au niveau des noeuds de réseau à un moment postérieur à une réception des données d'événement.

3. L'appareil (100) selon l'une quelconque de la revendication 1 ou 2, dans lequel les données de réseau courantes incluent des résultats de mesures de connectivité effectuées par l'UAV ou un terminal de communication différent de l'UAV.

4. L'appareil (100) selon la revendication 1, dans lequel les données de réseau courantes incluent une indication d'un nombre courant, ou un nombre agrégé sur une période temporelle, de terminaux de communication par unité de zone, et l'interface de sortie rapporte ce nombre de terminaux de communication par zone au noeud de contrôle d'aviation.

5. L'appareil (100) selon l'une quelconque des revendications 1 à 4, dans lequel les données de couverture 3D courantes incluent une puissance de signal.

6. L'appareil (100) selon la revendication 1, dans lequel la probabilité de transfert dépend au moins d'une de la vitesse de déplacement et de la direction de déplacement de l'UAV.

7. L'appareil (100) selon l'une quelconque des revendications 1 à 6, dans lequel les données de réseau stockées et les données de réseau courantes incluent des données d'une pluralité de réseaux de communication sans fil.

8. L'appareil (100) selon l'une des revendications 1 à 7, dans lequel la zone de vol tridimensionnelle est sous-divisée en une pluralité de sous-zones, et le circuit est configuré pour calculer les données de couverture 3D courantes respectivement pour la pluralité de sous-zones.

9. L'appareil (100) selon l'une quelconque des revendications 1 à 8, dans laquelle le circuit est configuré pour calculer les données de couverture 3D courantes selon un modèle pour prédire une couverture 3D, et le modèle est généré selon les données de réseau stockées et automatiquement mis à jour selon les données de réseau courantes.

10. L'appareil (100) selon la revendication 9, dans lequel le modèle est mis à jour par apprentissage machine (machine learning).

11. Noeud de contrôle d'aviation (600) pour guider un véhicule aérien sans pilote, UAV (Unmanned Aerial Vehicle), (460) dans une zone de vol tridimensionnelle, 3D, au sein d'un espace aérien, comprenant :

une interface d'entrée (620) configurée pour acquérir automatiquement des données de couverture 3D courantes rapportées indiquant une couverture courante sur trois dimensions dans la zone de vol tridimensionnelle, les données de couverture 3D étant déterminées en corrélant des données de réseau stockées incluant des données de localisation de noeuds de réseau d'un réseau de communication sans fil au sein de la zone de vol et des données de réseau courantes incluant des données de connectivité courantes des noeuds de réseau ; et
un circuit (630) configuré pour exécuter le guidage de l'UAV (460) ou pour accorder une autorisation de contrôle de trafic aérien pour l'UAV (460) dans la zone de vol selon les données de couverture 3D courantes dans lequel
les données de couverture 3D courantes incluent une indication d'une probabilité de transfert de transfert par l'IJAV (460) d'un noeud de réseau vers un autre noeud de réseau.

12. Procédé de traitement de données pour guider des véhicules aériens sans pilote, UAV (Unmanned Aerial Vehicle), dans une zone de vol tridimensionnelle, 3D, au sein d'un espace aérien, comprenant :

acquisition (S210), à partir d'un stockage de données, de données de réseau stockées incluant des données de localisation de noeuds de réseau d'un réseau de communication sans fil au sein de la zone de vol ;
acquisition (S220) de données de réseau courantes incluant des données de connectivité courantes des noeuds de réseau ; et
traitement (S230) de données de couverture 3D courantes indiquant une couverture de réseau courante sur trois dimensions dans la zone de vol tridimensionnelle en corrélant les données de réseau stockées et les données de réseau courantes ; et
rapport automatique des données de couverture 3D courantes auprès d'un noeud de contrôle d'aviation pour accorder une autorisation d'un contrôle de trafic aérien pour l'UAV (460) dans la zone de vol ou pour procéder à un contrôle de l'UAV (460) ;
dans lequel
les données de couverture 3D courantes incluent une indication d'une probabilité de transfert de transfert par l'UAV d'un noeud de réseau vers un autre noeud de réseau.

13. Procédé de contrôle d'aviation pour guider un véhicule aérien sans pilote, UAV (Unmanned Aerial Vehicle), dans une zone de vol tridimensionnelle, 3D, au sein d'un espace aérien, comprenant :

acquisition (S710) de données de couverture 3D courantes automatiquement rapportées indiquant une couverture de réseau courante sur trois dimensions dans la zone de vol tridimensionnelle, les données de couverture 3D étant déterminées en corrélant des données de réseau stockées incluant des données de localisation de noeuds de réseau d'un réseau de communication sans fil au sein de la zone de vol et des données de réseau courantes incluant des données de connectivité courantes des noeuds de réseau ; et

exécution (S720) du guidage de l'UAV ou accord d'une autorisation de contrôle de trafic aérien pour l'UAV (460) dans la zone de vol selon les données de couverture 3D courantes ;

dans lequel

les données de couverture 3D courantes incluent une indication d'une probabilité de transfert de transfert par l'UAV d'un noeud de réseau vers un autre noeud de réseau.

110

Stored network
data interface

120

Current network
data interface

100

130

3D coverage
processing circuitry

**Fig. 1**

Acquiring stored
network data

S210

Acquiring current
network data

S220

Computing 3D
coverage data

**Fig. 2**

S230

Fig. 3

Fig. 4

580

| ANSP, running ATM/UTM need data for approval process | UAV Service Providers flight planning & operation | Target customers |
|---|---|---|

500

| Combined Data Sets | Analytics | Hub data |
|---|---|---|
| Billing (e.g. transaction based) | Reporting Engine | center |

520 A-C

| Data instance A | Data instance B | Data instance C | Individual instances deployed at MNO (e.g private cloud) |
|---|---|---|---|
| MNO A (...) | MNO B (...) | MNO C (...) | |

530A          530B          (...)          530C

**Fig. 5**

620

Current coverage data input interface

600

630

Guiding circuitry

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018293897 A1
- US 2016371985 A1
- US 2016328980 A1